# EUROPEAN PATENT APPLICATION

(11) **EP 3 736 552 A1**
(43) Date of publication of application: **11.11.2020**
(21) Application number: 19173199.1
(22) Date of filing: 08.05.2019
(51) Int. Cl.: G01L 5/24, F16B 31/02, G01L 1/22

(54) **SHEAR SENSOR COLLAR**

(71) Applicant: Hilti Aktiengesellschaft, 9494 Schaan (LI)
(72) Inventor: Pfarr, Lukas, 6800 Feldkirch (AT); Gut, Manuel, 6811 Göfis (AT); Winkler, Bernhard, 6800 Feldkirch (AT); ter Braack, Tashari, 9475 Sevelen (CH); Khandozhko, Serhey, 9470 Buchs SG (CH)
(74) Representative: Hilti Aktiengesellschaft Corporate Intellectual Property

(57) **Abstract**

The invention relates to a sensor arrangement comprising a sensor collar, wherein the sensor collar comprises a sensor sleeve for being inserted into an anchor hole, and wherein the sensor collar comprises a sensor flange, which is fixedly connected to the sensor sleeve, and which radially protrudes from the sensor sleeve, for abutting on the mouth of the anchor hole, wherein a through hole, for accommodating an anchor rod anchored in the anchor hole, extends through the sensor sleeve and through the sensor flange, and at least one sensor for determining at least one physical quantity of the sensor flange. The invention furthermore relates to anchors and fastener arrangements comprising such sensor collars.

## Description

The invention relates to a sensor arrangement according to claim 1.

DE 102012020932 A1 describes a sensor arrangement comprising a washer and a sensor system for detecting forces that act perpendicular to the washer surfaces. The sensor system comprises at least one strain sensor which is arranged on the outer lateral surface of the washer.

Hoehler, M. S., Dowell, R. K., and Watkins, D. A., "Shear and Axial Load Measurement Device for Anchors in Concrete", Journal of Testing and Evaluation, Vol. 39, No. 4, 2011, pp. 646-654, describes a measurement arrangement for independently measuring anchor axial and shear forces. Axial forces are measured using a load washer. For shear measurement, a collar is placed around the anchor, and four pins are placed around the collar. Shearing in the anchor generates axial strains in the pins that are measured by strain gauges.

It is an object of the invention to provide sensor arrangements that allow, whilst being easy to manufacture, robust and reliable, particularly valuable measurements, in particular of shear.

This object is achieved by a sensor arrangement according to claim 1. Dependent claims refer to preferred embodiments of the invention.

According to the invention, there is provided to a sensor arrangement comprising a sensor collar, wherein the sensor collar comprises a sensor sleeve for being inserted into an anchor hole, and wherein the sensor collar comprises a sensor flange, which is fixedly connected to the sensor sleeve, and which radially protrudes from the sensor sleeve, for abutting on the mouth of the anchor hole, wherein a through hole, for accommodating an anchor rod anchored in the anchor hole, extends through the sensor sleeve and through the sensor flange, and at least one sensor for determining at least one physical quantity of the sensor flange. The invention furthermore relates to anchors and fastener arrangements comprising such sensor collars.

When an attachment part is fixed to a substrate using an anchor which extends through the attachment part into the substrate, the anchor might be subject to shear loads, i.e. radially directed tension acting on the anchor. For measuring these shear loads, placing sensors in the vicinity of the interface between the attachment part and the substrate appears promising, since this is the position where shearing usually has significant effect. But on the other hand, this position is usually not well accessible, and/or the environmental conditions for sensors might be unfavorable there.

The invention proposes a sensor arrangement, in particular a shear sensor arrangement, having a sensor collar provided with a sensor sleeve, which sensor sleeve is in particular intended to penetrate the interface between the attachment part and the substrate. The sensor sleeve is therefore able to pick up the shear load. The sensor collar furthermore includes a sensor flange, which has a larger diameter than the sensor sleeve, and which is intended to abut on the attachment part at the mouth of the anchor hole. The sensor arrangement further comprises at least one sensor for gauging the sensor flange. The sensor flange and the sensor sleeve are fixedly connected. As a consequence, stress information picked up by the sensor sleeve can propagate to the sensor flange, so that gauging the sensor flange can thus yield shear data. For example, shear impact on the sensor sleeve can lead to a deformation of the sensor flange, e.g. a previously circular sensor flange transforms to an elliptical shape when the sensor sleeve is sheared, and/or to mechanical stress within the sensor flange, and both of this can be measured by the at least one sensor that is in configured to measure on the sensor flange. In other words, the connected parts of the sensor collar transfer the impact of the shear force out of the anchor hole, from the sensor sleeve, up to the sensor flange, where sensors and corresponding electronics can be placed in a particularly easy manner. Accordingly, shear stress between a substrate and an anchored attachment part can be measured in a particularly easy and reliable manner. The sensor arrangement can be retrofitted to an installed anchor rod or included in a yet-to-be-installed anchor, what makes the sensor arrangement particularly versatile. Moreover, the sensor flange can serve as an abutment for a head of the anchor rod, e.g. for a screw nut or a fixed head of the anchor rod. In this case, the sensor arrangement could also be enabled to measure tensile force, in particular if a plurality of sensors is provided, making the sensor arrangement even more useful.

The sensor sleeve is intended to be inserted into an anchor hole, i.e. into a hole in which at least the anchor rod of an anchor is intended to be placed and anchored. The anchor hole can extend in several distinct parts. In particular, the anchor hole can extend through an attachment part into a substrate that is located next to the attachment part. Preferably, the anchor hole has at least approximately circular cross-section. The anchor hole could also be stepped. In particular, the anchor hole can also be countersunk into the attachment part, in which case the sensor flange could be located in sunk manner in a recess of the attachment part.

The sensor sleeve is preferably a hollow cylinder, with a cylindrical through hole. This allows particular homogenous shear pick-up.

The sensor flange, which can also be called a sensor washer, is intended to abut on the mouth of the anchor hole, i.e. on the surface that surrounds the anchor hole. For this reason, the sensor flange has, at least in regions, larger diameter than the anchor hole at the mouth of the anchor hole. The sensor flange is preferably a hollow cylinder, with a cylindrical through hole. This allows particular homogenous shear measurement. Being a flange, the axial height of the sensor flange would preferably be smaller than its diameter. The sensor flange juts out over the sensor sleeve in the radial direction.

In accordance with engineering practice, the individual cylinders might have chamfers and/or radii at their ends.

Where the terms "radial", "axial" and/or "circumferential" are used, this can in particular refer to the longitudinal axis of the sensor collar, which, when installed, preferably coincides with the longitudinal axis of the anchor.

Each of the sensor collar and the sensor flange preferably form a closed ring around the through hole. However, optionally through slits could be provided in the sensor collar, the sensor flange or in both.

The through hole provides a passageway for the anchor rod when the latter is located within the anchor hole. The through hole leads through both the sensor sleeve and the sensor flange.

The sensor flange is fixedly connected to the sensor sleeve in order to allow stress transfer from the sensor sleeve to the sensor flange.

The sensor is intended to determine at least one measurable physical, in particular mechanical, quantity of the sensor flange, which, due to the fixed connection between the sensor flange and the sensor sleeve, allows to draw inferences about the stress state, in particular about the shear stress, at the sensor sleeve. The at least one physical quantity of the sensor flange is thus in particular a, preferably mechanical, quantity that is correlated with shear in the sensor sleeve. A physical quantity can be in particular regarded as a physical property of a material that can be quantified by measurement. The sensor arrangement might also comprise one or more auxiliary sensors for determining other quantities, possibly also quantities not related to the sensor flange.

The corresponding impact on the sensor flange can either be measured indirectly by sensing deformation or directly by sensing mechanical stress. Thus, preferably, the at least one sensor could be a deformation sensor (e.g. a conventional strain gauge or an airbrushed strain gauge) for determining sensor flange deformation or the at least one sensor could be a stress sensor (e.g. an inductive sensor for (inverse) magnetostriction measurement) for determining sensor flange stress.

It is particularly advantageous if the sensor flange adjoins the sensor sleeve. Accordingly, there are no intermediary elements between the sensor sleeve and the sensor flange, which can allow particularly good and easy-to-interpret stress transfer.

It is particularly preferred if the sensor flange and the sensor sleeve are integral, i.e. they are one piece, which can further improve stress transfer and its interpretability, but which can also facilitate manufacturing.

It is useful if the at least one sensor is mechanically connected to the sensor collar. This can facilitate handling of the sensor arrangement. The at least one sensor may be permanently mounted on the sensor collar, or it might only be mounted temporarily. The at least one sensor could for example be glued to the sensor collar.

In particular, at least a portion of the at least one sensor can be positioned on the sensor flange. This can be advantageous in view of handling and measurement reliability.

It is especially preferred if at least a portion of the at least one sensor is positioned on the lateral surface of the sensor flange, in particular on the outer lateral surface of the sensor flange. Accordingly, at least a portion of the sensor is placed remote from the faces of the sensor flange. The faces of the sensor flange might be subject to abrasion during installation, in particular caused by tightening or loosening an anchor nut. Thus, by positioning the sensor on the lateral surface of the sensor flange, the sensor can be particularly well protected, leading to especially good reliability and/or sensor performance. The lateral surface of the sensor flange can in particular be that surface that connects the faces of the sensor flange.

The sensor arrangement can have precisely one sensor for determining a physical quantity of the sensor flange. This can be advantageous in view of manufacturing costs. It can be particularly useful, however, if the sensor arrangement comprises a plurality of sensors for determining a physical quantity of the sensor flange, in particular a quantity that allows to draw inferences about the stress state, in particular the shear stress, at the sensor sleeve. Since shear in the sensor sleeve often creates a two-dimensional deformation of the sensor flange (in particular a transition from circular circumference to elliptical circumference) using two or more of such sensors can improve reliability of data acquisition and/or allow to filter out superposed axial stresses. Moreover, using a plurality of such sensors can allow more complex measurements, such as measurement of shear force direction, in particular in order to derive changes in force impact direction, or measurement of three-dimensional forces, for example for assessment of structural integrity at a fastening point.

In case that there are several sensors for determining a physical quantity of the sensor flange, these sensors are preferability equipped and/or arranged as described here in connection with a single sensor.

The sensor arrangement can have precisely two sensors for determining a physical quantity of the sensor flange, since this provides a particular good cost/benefit-ratio: the second sensor can significantly improve the data basis without generating significant extra costs.

Preferentially, at least two sensors for determining a physical quantity of the sensor flange are positioned on the lateral surface, in particular on the outer lateral surface, of the sensor flange. This can allow particular effective and reliable measurement.

The sensor sleeve is preferably a right circular cylinder. This highly symmetrical design can for example allow particularly efficient data processing. Being a circular cylinder, it has a circular base. Being a right cylinder, it is not oblique. Due to the through hole, the cylinder is a hollow cylinder.

The sensor flange is preferably a right circular cylinder. This highly symmetrical design can for example allow particularly efficient data processing. Due to the through hole, the cylinder is a hollow cylinder.

Again, in accordance with engineering practice, the individual cylinders might have chamfers and/or radii at their ends.

The sensor sleeve and the sensor flange are preferentially arranged coaxially. This highly symmetrical design can for example allow particularly efficient data processing. The axis of the through hole preferably coincides with the common axis of the sensor sleeve and the sensor flange.

The through hole is preferably unstepped, i.e. provided with constant cross-section except for its ends, and/or right circular cylindrical, which can further facilitate data interpretation and/or processing.

Advantageously, the sensor sleeve is a metal part, and/or the sensor flange is a metal part. This can give a particularly robust and durable design. Moreover, the mechanical behavior of metal in response to stress can provide particularly easy-to-interpret data and therefore particularly efficient data processing. In particular, the sensor sleeve and/or the sensor flange can be steel parts. The metal parts might also be coated.

The invention also relates to an anchor comprising an anchor rod and the described sensor arrangement, wherein the sensor collar surrounds the anchor rod. Thus, the sensor arrangement is arranged with respect to an anchor rod as intended. In particular, the anchor rod passes through the through hole of the sensor collar. The anchor can be a chemical anchor intended to be anchored chemically or a mechanical anchor intended to be anchored mechanically, or a chemical-mechanical hybrid.

In particular, the anchor can comprise an expansion sleeve surrounding the anchor rod and a wedge attached to the anchor rod, for expanding the expansion sleeve. Accordingly, the anchor is an expansion anchor. The wedge biases the expansion sleeve radially outwardly as the wedge is pulled-into the expansion sleeve. The wedge can preferably be an expansion cone.

According to an especially preferred embodiment of the invention, the expansion sleeve abuts on the sensor sleeve of the sensor collar. In this case, the sensor collar can be a part of the anchor mechanism of the anchor. This allows particularly easy and meaningful measurements in expansion anchor applications, and/or a particularly compact and easy-to-install arrangement can be obtained. The expansion sleeve can abut directly on the sensor sleeve of the sensor collar, or indirectly, for example via a compressible sleeve of the anchor. The expansion sleeve and the sensor sleeve could also be integral, in which case abutment is via the internal structure of the united sleeves.

The invention also relates to a fastener arrangement comprising a substrate, an attachment part, and the described sensor arrangement, wherein the sensor sleeve of the sensor collar extends through the attachment part into the substrate. Accordingly, the sensor is arranged in a substructure as intended. In particular, the already-mentioned anchor hole extends through the attachment part into the substrate and the sensor sleeve is arranged in the anchor hole, wherein the sensor sleeve is sufficiently long so that it reaches into the substrate whilst the sensor flange abuts on the attachment part. The sensor flange can abut directly or indirectly, for example via a washer, on the attachment part and/or on the mouth of the anchor hole. The substrate could for example be a concrete or masonry substrate and the attachment part could be a metal part.

The fastener arrangement can further comprise a described anchor. In particular, the fastener arrangement can comprise an anchor rod, wherein the sensor collar surrounds the anchor rod.

Features that are described here in connection with the inventive sensor arrangement can also be used in connection with the inventive anchor and/or the inventive fastener arrangement and features that are described here in connection with the inventive anchor and/or the inventive fastener arrangement can also be used in connection with the inventive sensor arrangement.

The invention is explained in greater detail below with reference to preferred exemplary embodiments, which are depicted schematically in the accompanying drawings, wherein individual features of the exemplary embodiments presented below can be implemented either individually or in any combination within the scope of the present invention.
- Figure 1:: Is partial sectional view of a first embodiment of a fastener arrangement comprising an anchor and a sensor arrangement.
- Figure 2:: Is partial sectional view of a second embodiment of a fastener arrangement comprising an anchor, a sleeve anchor in this case, and a sensor arrangement.
- Figure 3:: Is a longitudinally cut cross-section of the anchor of the embodiment of figure 2.
- Figure 4:: Is a first perspective view of the sensor arrangement of the embodiments of figures 1 to 3.
- Figure 5:: Is a second perspective view of the sensor arrangement of the embodiments of figures 1 to 3. Compared with figure 4, the sensor collar is rotated by 180° around the longitudinal axis.
- Figure 6:: Is a third perspective view of the sensor arrangement of the embodiments of figures 1 to 3. Compared with figures 4 and 5, line of sight is now directed to the top face of the sensor collar.
- Figure 7:: Is an alternative embodiment of a sensor arrangement, which can be preferably used in connection with the fastener arrangements and the anchors of figures 1 to 3, in a perspective view similar to that of figure 6.
- Figure 8:: Is another alternative embodiment of a sensor arrangement, which can be used preferably in connection with the fastener arrangements and the anchors of figures 1 to 3, in a perspective view similar to that of figures 6 and 7.

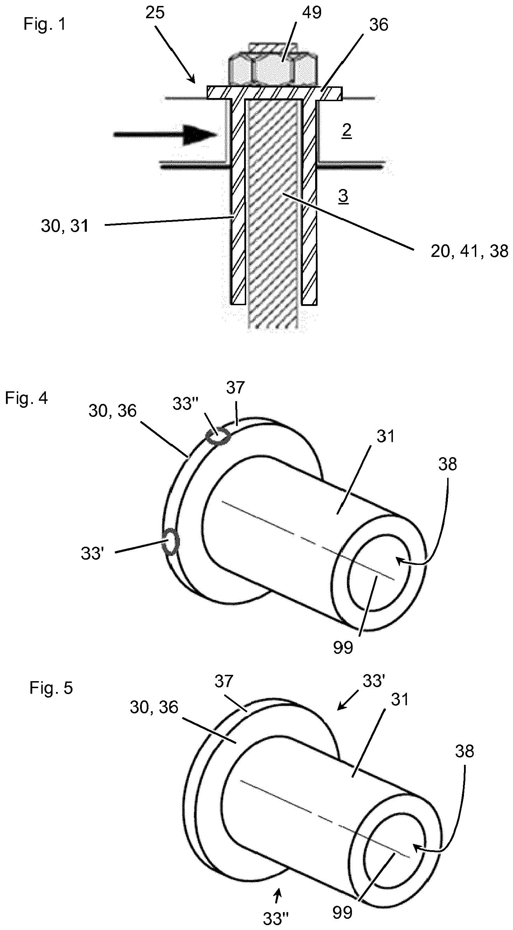

Figure 1 and figures 2 and 3, respectively, show two different embodiments of fastener arrangements, each comprising an anchor and a sensor arrangement. Sensor arrangements that can be used in both embodiments are shown in figures 4 to 8.

The first sensor arrangement, shown in figures 4 to 6, comprises a sensor collar 30, which consists of a sensor sleeve 31 and a sensor flange 36. Both the sensor sleeve 31 and the sensor flange 36 are right circular cylinders. The sensor sleeve 31 and the sensor flange 36 are arranged coaxially with a longitudinal axis 99. The sensor flange 36 has larger outer diameter, and preferably lower height, than the sensor sleeve 31, with height and diameter being measured with respect to the longitudinal axis 99. Accordingly, the sensor flange 36 projects radially from the sensor sleeve 31.

The upper face of the sensor sleeve 31 adjoins the lower face of the sensor flange 36, and the sensor sleeve 31 is fixedly connected to the sensor flange 36 at said faces. In particular, the sensor sleeve 31 and the sensor flange 36 are integral. Both the sensor sleeve 31 and the sensor flange 36 can consist of metal, which might also be coated.

A right cylindrical through hole 38 leads through both the sensor sleeve 31 and the sensor flange 36, wherein the through hole 38 is coaxial with the longitudinal axis 99.

Positioned on the outer lateral surface 37 of the sensor flange 36 are two sensors 33', 33" for determining a physical quantity of the sensor flange 36, wherein the two sensors 33', 33" could for example be strain gauges. In the embodiment of figures 4 to 6, the sensors 33', 33" are spaced 90° around the longitudinal axis 99.

Figure 1 shows a fastener arrangement in which the sensor collar 30 of figures 4 to 6 could be used.

The fastener arrangement comprises a substrate 3 and an attachment part 2, wherein an anchor hole 20 leads through the attachment part 2 into the substrate 3. An anchor rod 41 is located in the anchor hole 20. At its forward, tip region, the anchor rod 41 is anchored at the substrate 3, for example chemically and/or mechanically. At its opposite rear region, a head 49 is placed on the anchor rod 41, which abuts on the attachment part 2. The anchor rod 41, its forward anchoring mechanism and its head 49 form an anchor that secures the attachment part 2 to the substrate 3.

The sensor collar 30 is mounted on the anchor rod 41 so that the anchor rod 41 is located in the through hole 38 of the sensor collar 30, i.e. the sensor collar 30 surrounds the anchor rod 41. The sensor flange 36 axially abuts on the mouth 25 of the anchor hole 20, which is located at the attachment part 2. The sensor sleeve 31 axially projects from the sensor flange 36 into the anchor hole 20. The sensor sleeve 31 is sufficiently high so that its forward face, i.e. its face remote from the sensor flange 36, reaches into the substrate 3. Thus, the sensor sleeve 31 penetrates through the attachment part 2 into the substrate 3. Accordingly, the sensor sleeve 31 extends both radially between the anchor rod 41 and the attachment part 2 and between the anchor rod 41 and the substrate 3.

The sensor flange 36 is located axially between the head 49 and the attachment part 2. The head 49 therefore abuts on the attachment part 2 via the sensor flange 36. Optionally, additional washers could be placed between the head 49 and the sensor flange 36 and/or between the sensor flange 36 and the attachment part 2.

When the attachment part 2 is laterally displaced with respect to the substrate 3, as indicated with an arrow in figure 1, the sensor sleeve 31 will become shear-stressed. Due to the fixed connection with the sensor flange 36, shear stress of the sensor sleeve 31 will impact the sensor flange 36, and can in particular lead to a deformation of the sensor flange 36. For example, shear stress can lead to a transition of the sensor flange 36 from a circular geometry into an elliptical geometry. The shear-induced transition can be measured using the sensors 33', 33" for determining a physical quantity of the sensor flange 36. Thus, the sensor arrangement allows to measure shear and in particular shear forces acting on the anchor rod 41 and/or the anchor, at a position that is located at a distance from where shearing primarily occurs.

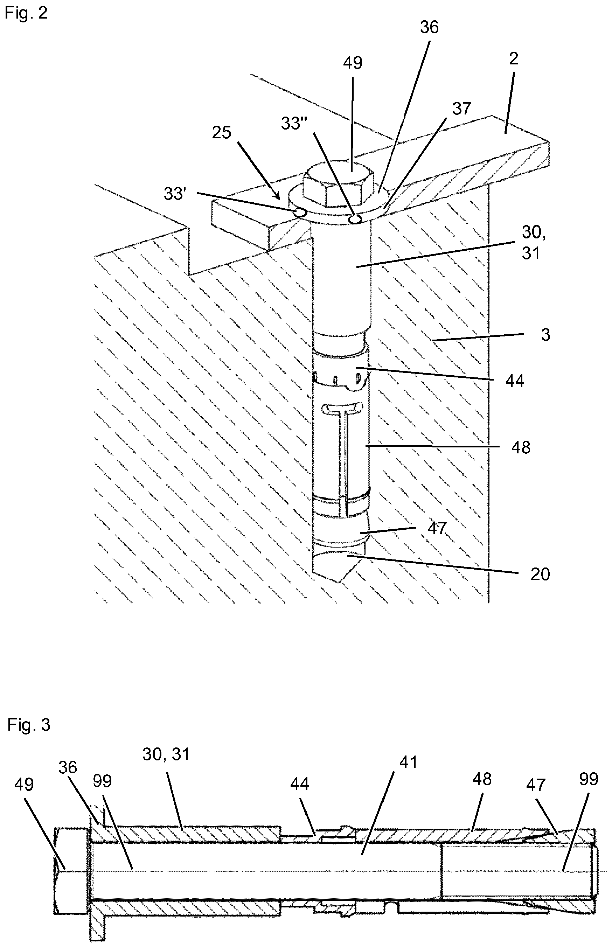

Figures 2 and 3 show a somewhat different fastener arrangement in which the sensor collar 30 of figures 4 to 6 could be used. The embodiment of figures 2 and 3 differs from that of figure 1 primarily on the anchor type. In the following, focus will be on these differences, and, in order to avoid repetition, reference is made to the above for the common features, which applies mutatis mutandis.

In particular, in the embodiment of figures 2 and 3, the anchor is a sleeve-type anchor, and the sensor collar 30 is integrated into the anchoring mechanism of the anchor.

The anchor of figures 2 and 3 comprises an expansion sleeve 48, which surrounds the anchor rod 41. The anchor of figures 2 and 3 further comprises a wedge 47 - an expansion cone by way of example - which radially expands the expansion sleeve 48 when it is drawn axially into the expansion sleeve 48. The wedge 47 is arranged on the anchor rod 41 in the forward end region of the anchor rod 41, and the wedge 47 is fixed to the anchor rod 41 to transfer tensile force from the anchor rod 41 into the wedge 47. By way of example, the wedge 47 is threadedly fixed to the anchor rod 41. At its rearward end, i.e. at its end remote from the wedge 47, the expansion sleeve 48 abuts on the forward face of the sensor sleeve 31, by way of example via a compressible sleeve 44 that can axially collapse as the anchor is installed. The sensor sleeve 31 is thus a counter bearing for the expansion sleeve 48 and therefore, the sensor sleeve 31 is a part of the expansion mechanism of the anchor.

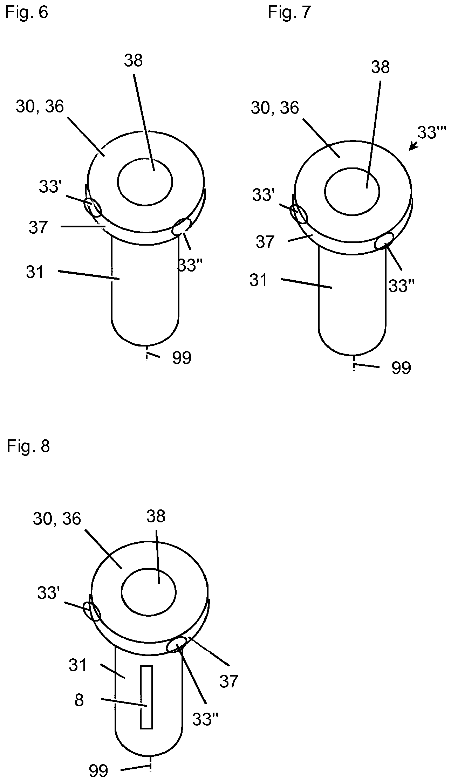

The sensor arrangement of figure 7 is a modification of that shown in figures 4 to 6 and can replace the sensor arrangement in both the fastener arrangement of figure 1 and in the fastener arrangement of figures 2 and 3.

The sensor arrangement of figure 7 differs from that shown in figures 4 to 6 in the quantity of sensors 33', 33", 33'" for determining a physical quantity of the sensor flange 36. According to figure 7, there are three sensors 33', 33", 33'" for determining a physical quantity of the sensor flange 36, all arranged at the outer lateral surface 37 of the sensor flange 36, wherein the sensors 33', 33", 33"' are spaced 120° around the longitudinal axis 99.

The sensor arrangement of figure 8 is another modification of that shown in figures 4 to 6 and can replace the sensor arrangement in both the fastener arrangement of figure 1 and in the fastener arrangement of figures 2 and 3.

The sensor arrangement of figure 8 differs from that shown in figures 4 to 6 in that at least one auxiliary sensor 8 is placed on the sensor sleeve 31 of the sensor collar 30, in particular on the lateral surface of the sensor sleeve 31.

## Claims

1. Sensor arrangement comprising
- a sensor collar (30),
- wherein the sensor collar (30) comprises a sensor sleeve (31) for being inserted into an anchor hole (20), and
- wherein the sensor collar (30) comprises a sensor flange (36), which is fixedly connected to the sensor sleeve (31), and which radially protrudes from the sensor sleeve (31), for abutting on the mouth (25) of the anchor hole (20),
- wherein a through hole (38), for accommodating an anchor rod (41) anchored in the anchor hole (20), extends through the sensor sleeve (31) and through the sensor flange (36), and
- at least one sensor (33) for determining at least one physical quantity of the sensor flange (36).

2. Sensor arrangement according to claim 1,
**characterized in that**
the at least one physical quantity of the sensor flange (36) is a mechanical quantity that is correlated with shear in the sensor sleeve (31).

3. Sensor arrangement according to any one of the proceeding claims,
**characterized in that**
the at least one sensor (33) is a deformation sensor for determining sensor flange (36) deformation or the at least one sensor (33) is a stress sensor for determining sensor flange (36) stress.

4. Sensor arrangement according to any one of the proceeding claims,
**characterized in that**
the sensor sleeve (31) adjoins the sensor flange (36).

5. Sensor arrangement according to any one of the proceeding claims,
**characterized in that**
the sensor flange (36) and the sensor sleeve (31) are integral.

6. Sensor arrangement according to any one of the proceeding claims,
**characterized in that**
the at least one sensor (33) is mechanically connected to the sensor collar (30).

7. Sensor arrangement according to any one of the proceeding claims,
**characterized in that**
at least a portion of the at least one sensor (33) is positioned on the sensor flange (36).

8. Sensor arrangement according to claim 7,
**characterized in that**
at least a portion of the at least one sensor (33) is positioned on the outer lateral surface (37) of the sensor flange (36).

9. Sensor arrangement according to any one of the proceeding claims,
**characterized in that**
it comprises a plurality of sensors (33', 33", 33"') for determining a physical quantity of the sensor flange (36).

10. Sensor arrangement according to claim 9,
**characterized in that**
at least two sensors (33', 33", 33'") for determining a physical quantity of the sensor flange (36) are positioned on the outer lateral surface of the sensor flange (36).

11. Sensor arrangement according to any one of the proceeding claims,
**characterized in that**
the sensor sleeve (31) is a right circular cylinder, **in that**
the sensor flange (36) is a right circular cylinder, and **in that**
the sensor sleeve (31) and the sensor flange (36) are arranged coaxially.

12. Sensor arrangement according to any one of the proceeding claims,
**characterized in that**
the through hole (38) is unstepped and right circular cylindrical.

13. Sensor arrangement according to any one of the proceeding claims,
**characterized in that**
the sensor sleeve (31) is a metal part and the sensor flange (36) is a metal part.

14. Anchor comprising an anchor rod (41) and the sensor arrangement according to any one of the proceeding claims, wherein the sensor collar (30) surrounds the anchor rod (41).

15. Anchor according to claim 14,
**characterized in that**
it comprises an expansion sleeve (48) surrounding the anchor rod (41) and a wedge (47) attached to the anchor rod (41), for expanding the expansion sleeve (48), wherein the expansion sleeve (48) abuts on the sensor sleeve (31) of the sensor collar (30).

16. Fastener arrangement comprising a substrate (3), an attachment part (2) and the sensor arrangement according to any one of claims 1 to 12, wherein the sensor sleeve (31) of the sensor collar (30) extends through the attachment part (2) into the substrate (3) and the sensor flange (36) abuts on the attachment part (2).

17. Fastener arrangement according to claim 16,
**characterized in that**
it comprises an anchor rod (41), wherein the sensor collar (30) surrounds the anchor rod (41).
